# EUROPEAN PATENT APPLICATION

(11) **EP 1 832 968 A1**
(43) Date of publication of application: **12.09.2007**
(21) Application number: 06110975.7
(22) Date of filing: 10.03.2006
(51) Int. Cl.: G06F 3/048

(54) **Touch keys input method**

(71) Applicant: E-Lead Electronic Co., Ltd., Chang-Hua (TW)
(72) Inventor: CHEN, Stephen, Chang-Hua (TW)
(74) Representative: Viering, Jentschura & Partner

(57) **Abstract**

An induction key input method to improve input accuracy includes at least the following steps: corresponding a movement of an induction key to at least one character table; displaying a character table on a screen according to different conditions when a user's finger touches the surface of the induction key; and indicating a different differential mark on a selected character on the character table after the character represented by the induction key on a specific location is touched by the finger. Through the method input accuracy can be enhanced and user's viewing frequency of the keys can be reduced.

## Description

### BACKGROUND OF THE INVENTION

### 1. Field of the Invention

The invention relates to an induction key input method to improve input accuracy and reduce user's viewing frequency of the keys.

### 2. Description of the Prior Art

There are many methods for entering characters to meet varying user's requirements, such as handwriting, keyboard (keys), remote controller and the like. Keyboard is widely used. For instance, keys on the computer keyboard and handset provide users fast and convenient character entering operation. However, non-professional users often have to lower the head to look at the keyboard during typing to search or confirm the correct keys for the entering characters, then raise the head to look at the screen to check the correctness of the input characters. This especially troublesome when two or more types of characters have to be switched, such as entering Japanese, Chinese and English at the same time. The same key could means English, Japanese or Chinese under different input conditions. Moreover, users often have to lower the head to look at the keyboard with a great attention. It often happens that after having typed a series of characters, the characters shown on screen are not the ones intended. In addition, seeing the keyboard could be difficult due to the computer keys are too small or the ambience is too dark to see the keyboard clearly. All this affects data entry speed and convenience.

Furthermore, the present input methods are limited to printed characters on the keys. For instance, in Taiwan the keys could contain phonetic symbols, Changjei character codes, Dayi character codes and English characters. When there is a need to input non-English or non-Chinese characters such as Japanese characters, Korean characters, or the like, the keyboard does not have these symbols, as a result, data entry becomes a problem.

In view of the aforesaid problems, it is an object of the present invention to provide an induction key input method to improve input accuracy and reduce user's viewing frequency of keys. The method includes at least the following procedures:

Correspond the movement of an induction key to at least one character table on a screen;

Display the character table corresponding to the conditions when user's finger touches the surface of the induction key in different conditions; and

Indicate the character on the character table by a different differential mark when the finger has touched the induction key on a selected location that represents the character.

In one aspect, the procedures of the induction key input method set forth above further includes automatic disappearing from the character table on the screen when a specific induction key is depressed by user's finger (such as ENTER or OK key).

In another aspect, when the finger touches the induction key on a selected location that represents a character, a different differential mark indicates the character on the character table. When the finger moves on the surface of the induction key, the character represented by the finger position also changes.

In yet another aspect, when the finger touches the surface of the induction key the character table is displayed on the screen according to different conditions. When the finger moves away from the induction key, the character table automatically disappears.

In still another aspect, when the character represented by the induction key at a selected location is touched by the finger, the character is indicated by a different differential mark on the character table. When the induction key is depressed, the representing character is input.

In another aspect, the movement of the induction key corresponds to at least one character table on the screen. The character table includes letters of characters, special symbols or control command symbols.

In yet another aspect, when the finger touches the surface of the induction key in different conditions, the screen displays the character table according to the conditions. A character input pane is provided above or around the character table to display the entered character.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a perspective view of the induction key of the invention.
FIG. 2 is a block diagram of the response system of the invention.
FIG. 3 is the flow chart of input operation of the invention.
FIG. 4 is a schematic view of an embodiment of the invention.
FIG. 5 is a schematic view of another embodiment of the invention.

### DESCRIPTION OF THE PREFERRED EMBODIMENTS

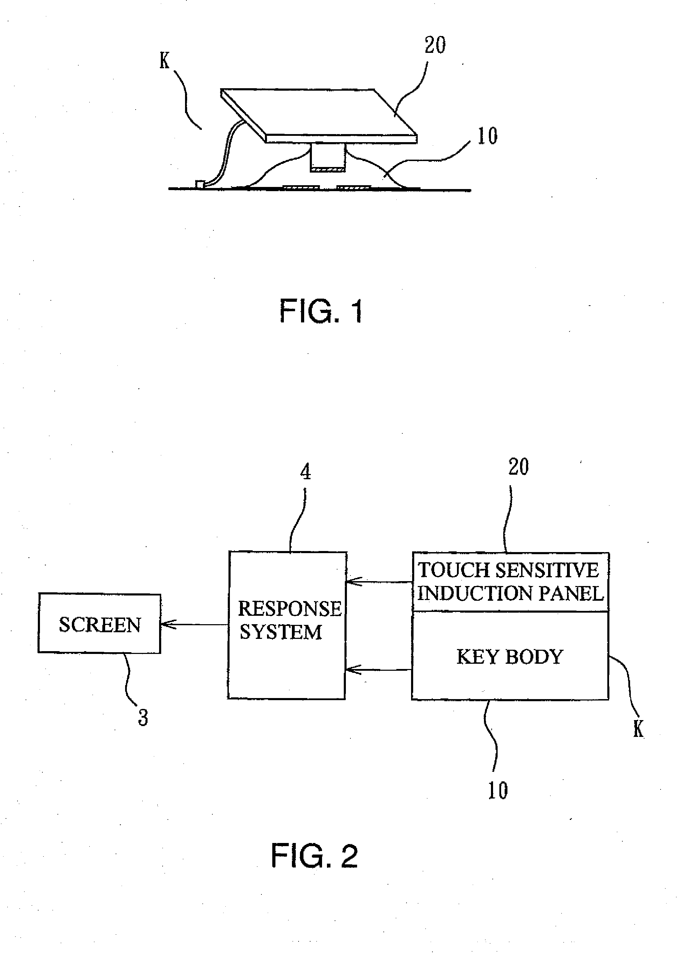

Refer to FIG. 1 for the perspective view of an induction key K according to the invention. It includes a body 10 and a Touch-sensitive pad 20 on a upper side connecting to a response system 4 (also referring to FIG. 2). The body 10 provides an interface to receive depression of user's finger to input a character. The Touch-sensitive pad 20 aims to detect touching of the finger to trigger the response system 4 to generate an input instruction, then the character sensed by the induction key K is displayed on an character input location of a screen 3.

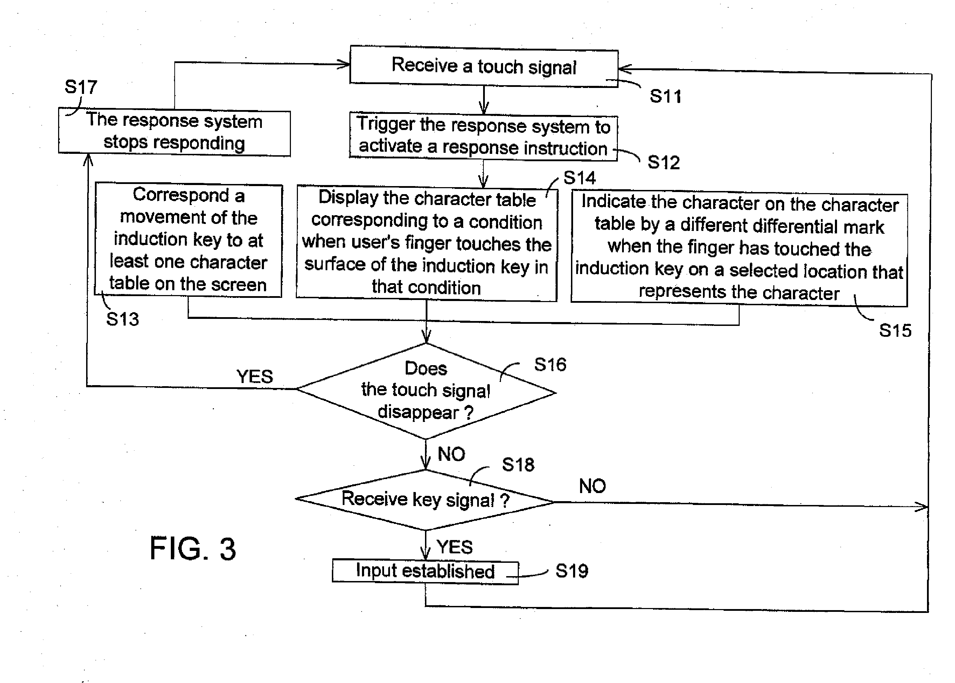

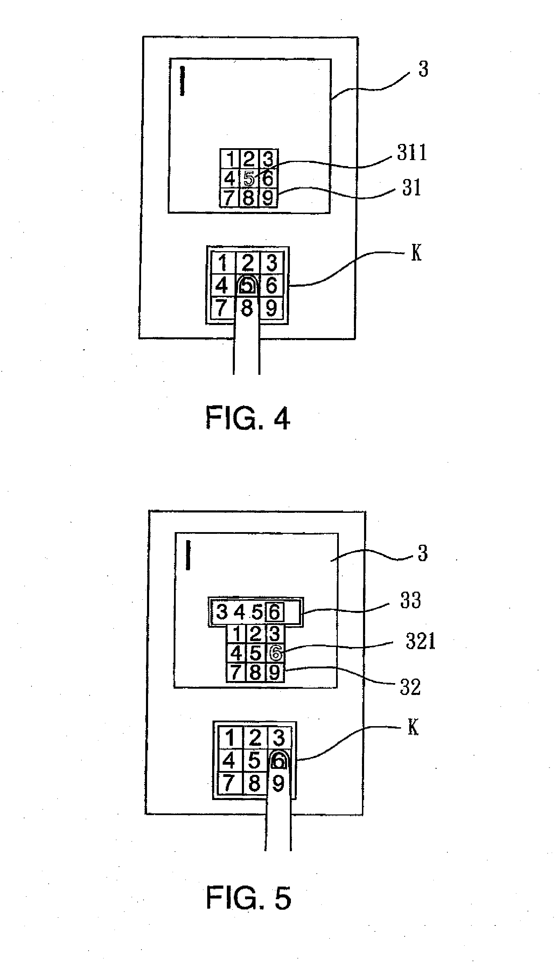

Referring to FIG. 3, when the finger touches the induction key K a touch signal is received (S11) to trigger the response system 4 to activate a response instruction (S12). The input method includes at least the following procedures:
the movement of the induction key corresponds to at least one character table on the screen (S13): when the finger touches the induction key K (referring to FIG. 4), the screen 3 displays at least one character table 31;
depending on different conditions, when the finger touches the surface of the induction key, the screen displays the character table corresponding to the condition (S14): namely for the same induction key K in different conditions, the screen 3 displays the character table 31 of different conditions. For instance, in a Chinese input mode the screen 3 displays a Chinese character table, and in English input mode the screen displays an English character table;
when the finger touches the character on a selected location represented by the induction key, a different differential mark is made on the character table to indicate the character (S15): for instance, when the finger touches the induction key K (referring to FIG. 4, the finger touches the induction key of "5"), the character on the character table 31 has a different differential mark to indicate that character 311 (for instance, the "5" in FIG. 4 is displayed by a different differential mark);
when the touch signal of the finger disappears (S16), it means that the finger is moved away from the induction key K, the response system 4 stops response (S17), and the character table 31 disappears from the screen 3; if the finger does not leave the induction key K and a depressing signal is received from the induction key K (S16, S18), character input is established (S19), and input operation is finished.

The induction key input method set forth above further allows the character table 31 to disappear from the screen 3 when a specific induction key is depressed by user's finger (such as ENTER or OK key).

In the induction key input method previously discussed, the movement of the induction key K corresponds to at least one character table 31 on the screen 3. The character table 31 contains characters 311 that include letters of characters, special symbols or control command symbols.

Referring to FIG. 5, in the induction key input method of the invention, depending on different conditions, when the finger touches the surface of the induction key K, the screen 3 displays a character table 32 corresponding to the conditions, and a character input pane 33 is displayed above or around the character table 32 to display the input character 321.

### LEGEND FOR DRAWINGS:

FIG. 2
   1- Response system, 3-Screen, 10 - Key body, 20 - Touch-sensitive pad
FIG. 3
   S11- Receive a touch signal
   S12 - Trigger the response system to activate a response instruction
   S13 - Correspond a movement of the induction key to at least one character table on the screen
   S14 - Display the character table corresponding to a condition when user's finger touches the surface of the induction key in that condition
   S15 - Indicate the character on the character table by a different differential mark when the finger has touched the induction key on a selected location that represents the character
   S16 - Does the touch signal disappear ?
   S17 - (Yes) The response system stops responding
   S18 - Receive key signal ?
   S19 - (Yes) Input established

## Claims

1. An induction key input method comprising at least the following steps:
corresponding a movement of an induction key to at least one character table;
displaying a character table on a screen according to different conditions when a user's finger touches the surface of the induction key; and
indicating a different differential mark on a selected character on the character table after the character represented by the induction key on a specific location is touched by the finger.

2. The induction key input method of claim 1, wherein when the character represented by the induction key on a specific location is touched by the finger, the character table indicates the character by a different differential mark; when the finger moves on the surface of the induction key the character corresponding to the location of the finger alters.

3. The induction key input method of claim 1, wherein the screen displays the character table of a selected condition when the finger touches the surface of the induction key in the selected condition, the character table disappearing automatically when the finger moves away from the induction key.

4. The induction key input method of claim 1 further allows the character table to vanish from the screen when a selected induction key is depressed by the user's finger.

5. The induction key input method of claim 1, wherein the character represented by the induction key on a specific location is indicated by a different differential mark on the character table, the representing character is input when the induction key is depressed.

6. The induction key input method of claim 1, wherein the movement of the induction key corresponds to at least one character table, the character table containing characters that include letters of characters, special symbols or control command symbols.

7. The induction key input method of claim 1, wherein the screen displays the character table corresponding to a selected condition when the finger touches the induction key in the selected condition, the screen also shows a character input pane above or around the character table to display input characters.
